# EUROPÄISCHE PATENTSCHRIFT

(11) **EP 0 414 093 B1**
(45) Veröffentlichungstag und Bekanntmachung des Hinweises auf die Patenterteilung: **19.10.1994**
(21) Anmeldenummer: 90115522.6
(22) Anmeldetag: 13.08.1990
(51) Int. Cl.: H02J 7/00

(54) **Schaltungsanordnung für Ladegleichrichter für Gleichspannungsenergiespeicher in Fernmeldeanlagen, insbesondere Fernsprechvermittlungsanlagen**
Circuit arrangement for charging rectifier for a direct current energy accumulator of a telecommunication installation especially for telecommunications exchanges
Agencement de circuits pour un chargeur à redresseur d'un accumulateur à courant continu dans une installation de télécommunications en particulier pour centraux téléphoniques

(30) Priorität: 25.08.1989 DE 3928222
(43) Veröffentlichungstag der Anmeldung: 27.02.1991
(73) Patentinhaber: SIEMENS AKTIENGESELLSCHAFT, 80333 München (DE)
(72) Erfinder: Kulzer, Ernst, Dipl.-Ing., D-8023 Pullach (DE)

(56) Entgegenhaltungen:
- EP-A- 0 376 191
- US-A- 4 818 891
- US-A- 4 847 899
- ELEKTROTECHNIK. Bd. 71, Nr. 2, 22. März 1989,WURZBURG DE Seiten 52 - 55; BRINKMANN,BARNTRUPP: 'not-und ersatzstrom usv mit wachhund'

## Beschreibung

Die Erfindung betrifft eine Schaltungsanordnung für Ladegleichrichter für Gleichspannungsenergiespeicher, insbesondere Speicherbatterien, in Fernmeldanlagen, insbesondere Fernsprechvermittlungsanlagen, in denen einer einer Funktionskontrolle eines vom Wechselspannungsversorgungsnetz gespeisten Umrichters dienenden Überwachungseinrichtung Gleichspannungsspeisung angeboten wird sowohl von einem ebenfalls vom Wechselspannungsversorgungsnetz gespeisten Hilfsumrichter als auch von einem von einem Gleichspannungsenergiespeicher gespeisten Gleichspannungswandler über einen dem Hilfsumrichter und einem dem Gleichspannungswandler zugeordneten, einer Entkopplung dienenden Richtleiter.

In Ladegleichrichtern der zuvor angegebenen, als bekannt vorauszusetzenden Art sind Überwachungseinrichtungen vorgesehen, die verschiedenen Steuerungsfunktionen dienen. Hierzu kann gehören eine Überwachung der Ausgangsspannung und des Ausgangsstroms des Ladegleichrichters. Ferner können mit einer solchen Überwachungseinrichtung von ihr festgestellte Betriebswerte (Spannung, Strom und dergleichen) mit Hilfe einer Anzeigeeinrichtung sichtbar gemacht werden. Darüber hinaus kann eine solche Überwachungseinrichtung auch zur Steuerung der Ladevorgänge dienen. Im normalen Betrieb möge ein Ladegleichrichter so gesteuert sein, daß er lediglich die Erhaltung der Ladung des Gleichspannungsenergiespeichers gewährleistet (Betriebszustand "Erhaltungs-Ladung"). Dagegen muß nach einem Ausfall der Wechselspannungsversorgung des Ladegleichrichters dafür gesorgt werden, daß der Gleichspannungsenergiespeicher, der während der Dauer dieses Ausfalls teilweise entladen wurde, wieder aufgeladen wird (Betriebszustand "Ladung"). Hierzu mißt die Überwachungseinrichtung die Dauer des Ausfalles der Wechselspannungsversorgung und bewirkt, daß dann, wenn diese Dauer ein bestimmtes vorgegebenes Maß überschritten hat, der Ladegleichrichter für eine bestimmte Zeitspanne auf Ladung geschaltet wird, d.h. die Wiederaufladung des Gleichspannungsenergiespeichers bewerkstelligt.

Eine Überwachungseinrichtung in einer Schaltungsanordnung der eingangs angegebenen Art kann auch noch weitere Funktionen wie z.B. der Regelung der Ausgangsspannung und/oder des Ausgangsstrom des Ladegleichrichters in Abhängigkeit von bestimmten Meßgrößen haben. Für solche Überwachungseinrichtungen besteht generell die Forderung, daß sie auch bei einem Ausfall der Wechselspannungsversorgung über das Wechselspannungsversorgungsnetz weiterarbeiten können müssen, z.B. für die obige Messung der Dauer eines Ausfalles der Wechselspannungsversorgung. Hierzu ist der Gleichspannungswandler vorgesehen, über den die Gleichspannungsversorgung für diese Überwachungseinrichtung sichergestellt ist für den Fall eines Ausfalles der Wechselspannungsversorgung. Zugleich aber besteht auch das Erfordernis, daß eine Überwachungseinrichtung auch dann weiterarbeitet, und zwar unterbrechungsfrei, wenn die Klemmenspannung des Gleichspannungsenergiespeichers so weit absinkt, z.B. infolge eines Kurzschlusses oder einer Überlastung, daß hierbei ein unterer Spannungsgrenzwert unterschritten wird, unter den die Versorgungsspannung für die Überwachungseinrichtung nicht absinken darf. Deshalb ist in einer Schaltungsanordnung der eingangs angegebenen Art vorgesehen, daß der Überwachungseinrichtung Gleichspannung von zwei Seiten über zwei der gegenseitigen Entkopplung dienende Richtleiter zugeführt wird und zwar einerseits von dem vom Wechselspannungsversorgungsnetz gespeisten Hilfsumrichter und andererseits von dem von dem Gleichspannungsenergiespeicher gespeisten Gleichspannungswandler. Fällt eine dieser beiden Gleichspannungsquellen aus, so ist die Gleichspannungsversorgung der Überwachungseinrichtung unterbrechungsfrei immer noch über die jeweils andere dieser beiden Energiequellen gewährleistet.

Die zuvor beschriebene Versorgung der Überwachungseinrichtung mit Gleichspannungen vom Gleichspannungswandler her einerseits und vom Hilfsumrichter her andererseits birgt jedoch auch die Gefahr in sich, daß eine in dem Gleichspannungswandler eintretende Betriebsstörung nicht erkannt wird, jedoch die Überwachungseinrichtung stromlos macht, d.h. ihr Weiterverarbeiten unterbricht, wenn die Wechselspannungsversorgung störungsbedingt unterbrochen wird.

Für die Erfindung besteht die Aufgabe, in einer Schaltungsanordnung der eingangs angegebenen Art geeignete Vorkehrungen zu treffen, mit deren Hilfe auf einfache Weise die Betriebsfähigkeit des Gleichspannungswandlers überwacht werden kann, wobei die Schwierigkeit zu überwinden ist, daß bei Ausfall der vom Gleichspannungswandler gelieferten Spannung die Spannungsversorgung für die Überwachungseinrichtung fortgesetzt wird durch Zulieferung von Gleichspannung an die Überwachungseinrichtung von dem genannten Hilfsumrichter her. Dieser Spannungsausfall, der sich - wie erläutert - auf die Weiterarbeit der Überwachungseinrichtung einerseits also nicht negativ auswirken soll, wird andererseits aber durch die Zufuhr von Gleichspannungen zur Überwachungseinrichtung von zwei Seiten her (über die genannten beiden Gleichrichter) verdeckt und verschleiert.

Mit Hilfe der Erfindung wird die gestellte Aufgabe dadurch gelöst, daß die vom Gleichspannungswandler angebotene Gleichspannung höher eingestellt ist als die vom Hilfsumrichter angebotene Gleichspannung, daß die Überwachungseinrichtung dieser beiden Gleichspannungen nach ihrer Höhe unterscheidet und bei Erhalt der niedrigeren Gleichspannung ein Vorhandensein der dem Gleichspannungswandler vom Gleichspannungsenergiespeicher zugeführten Gleichspannung, insbesondere innerhalb vorgegebener Grenzwerte, überprüft und daß die Überwachungseinrichtung bei Erhalt der niedrigeren Gleichspannung und bei Vorhandensein der dem Gleichspannungswandler vom Gleichspannungsenergie speicher zugeführten Gleichspannung ein Dignal für eine Störung des Gleichspannungswandlers abgibt.

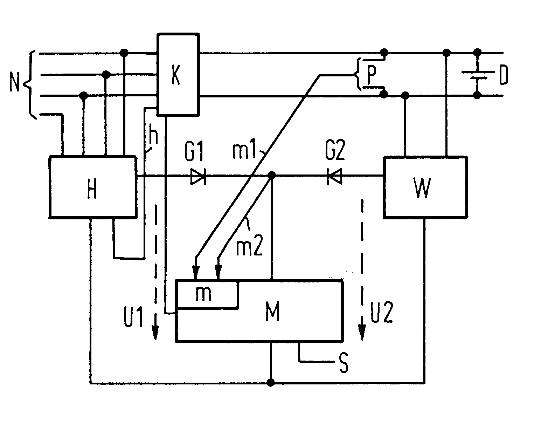

In der Zeichnung ist ein Ausführungsbeispiel der Erfindung nur in wesentlich zu ihrem Verständnis beitragenden Bestandteilen dargestellt, worauf dieselbige jedoch keineswegs beschränkt ist.

Ein Ladegleichrichter ist eingangsseitig an ein Wechselspannungsversorgungsnetz N angeschlossen. Er enthält u.a. einen umrichter K, über den in an sich bekannter Weise die Ladung einer Speisebatterie (Amtsbatterie) erfolgt. Dieser Umrichter ist eingangsseitig an das Wechselspannungsversorgungsnetz angeschlossen. An desselbe ist ebenfalls ein Hilfsumrichter H angeschlossen. Dieser liefert eine Ausgangsspannung U1, die er über einen Gleichrichter G1 u.a. einer Überwachungseinrichtung M zuführt. Dieser Überwachungseleinrichtung wird außerdem eine Gleichspannung seitens eines Gleichspannungswandlers W über einen Gleichrichter G2 zugeführt. Die beiden Gleichrichter G1 und G2 dienen in an sich bekannter weise zur Entkopplung des Hilfsumrichters H und des Gleichspannungswandlers W voneinander.

Die Ausgangsspannung des Gleichspannungswandlers U2 ist geringfügig höher als die Ausgangsspannung des Hilfsumrichters U1. Der Überwachungseinrichtung M wird also Gleichspannungsspeisung angeboten sowohl von dem vom Wechselspannungsversorgungsnetz gespeisten Hilfsumrichter H als auch von dem von der Speisebatterie D gespeisten Gleichspannungswandler W. Dadurch, daß - wie zuvor angegeben - die vom Gleichspannungswandler angebotene Gleichspannung etwas höher ist als die vom Hilfsumrichter angebotene Gleichspannung, empfängt die Überwachungseinrichtung in der normalen Betriebssituation ihre Energiezufuhr, d.h. also ihre Gleichspannungsspeisung vom Gleichspannungswandler W her.

Die Funktionen einer Überwachungseinrichtung können vielfältig sein. Mit ihrer Hilfe kann die Ausgangsspannung des Umrichters K, sowie seine Strombelastung überwacht werden; ebenso kann auch die Klemmenspannung der Speisebatterie überwacht werden. Mit Hilfe der Überwachungseinrichtung können auch weitere elektrische Werte des Ladegleichrichters erfaßt und registriert werden. Ferner können mit Hilfe der Überwachungseinrichtung von ihr erfaßte Werte und Daten an einem Display zur Anzeige gebracht werden. Ferner können mit Hilfe der Überwachungseinrichtung die Funktionen des Umrichters K und gegebenenfalls auch des Hilfsumrichters H gesteuert werden. Es besteht auch die Möglichkeit, daß der Hilfsumrichter steuerungsmäßig über einen Weg h den Umrichter K beeinflußt, und daß auf diese Weise die Überwachungseinrichtung M die Funktion des Hilfsumrichters mittelbar überwacht.

Eine weitere Aufgabe der Überwachungseinrichtung ist die Durchführung einer Zeitmessung und einer Zeitablaufsteuerung im Zusammenhang mit einem vorübergehenden z.B. störungsbedingten Ausfall des Wechselspannungsversorgungsnetzes N. Während der Dauer eines solchen Ausfalles erfolgt bekanntlich die Spannungsversorgung von zu versorgendenden Schalteinrichtungen ausschließlich über die Speisebatterie D. Diese wird dadurch während der Dauer des genannten Ausfalles entladen. Nach Beendigung des Ausfalles der Wechselspannungsversorgung ist ein Nachladen der Speisebatterie für eine bestimmte Dauer erforderlich, damit die volle Ladung der Speisebatterie wieder gegeben ist. Während des normalen Betriebes erfolgt über den umrichter K lediglich ein Nachladen der Speisebatterie nach Maßgabe des durchschnittlichen Stromverbrauches der zu speisenden Aggregate einschließlich des Energieverlustes innerhalb der Speisebatterie selbst.

Die Dauer eines Nachladens nach einem Ausfall der Wechselspannungsversorgung (N) kann sich nach der Dauer dieses Ausfalles richten. Nach Maßgabe der Dauer des Ausfalles der Wechselspannungsversorgung bemißt die Überwachungseinrichtung also die Dauer eines anschließenden Nachladens der Speise batterie D. Ebenso ist es auch möglich, mit Hilfe der Überwachungseinrichtung lediglich festzustellen, ob die Dauer des Ausfalles der Wechselspannungsversorgung einen bestimmten zeitlichen Grenzwert überschritten hat oder nicht. Liegt die Dauer der Unterbrechung der Wechselspannungsversorgung unterhalb dieses festgelegten Grenzwertes, so ist ein Nachladen nicht erforderlich. Überschreitet die Dauer der Unterbrechung der Wechselspannungsversorgung jedoch diesen Grenzwert, so wird dies von der Überwachungseinrichtung M registriert, und sie steuert dementsprechend einen Nachladevorgang einer bestimmten Dauer. Es kann vorgesehen sein, daß die Dauer des Nachladens konstant ist, oder daß sie nach Maßgabe der Dauer der Unterbrechung der Wechselspannungsversorgung durch die Überwachungseinrichtung gesteuert wird.

Da die Überwachungseinrichtung u.a. also die Aufgabe hat, während der Dauer der Unterbrechung der Wechselspannungsversorgung weiter zu arbeiten, um u.a. die Dauer dieser Unterbrechung festzustellen, ist es auch erforderlich, daß sie weiterhin mit Gleichspannung versorgt wird. Dies geschieht über den Gleichspannungswandler W in der bereits angegebenen Weise. Ebenso aber kann auch der Fall eintreten, daß die Klemmenspannung der Speisebatterie D absinkt, z.B. infolge eines Kurzschlusses oder infolge einer Überlastung von entsprechender Dauer. In einem solchen Falle (in dem also die Wechselspannungsversorgung nicht unterbrochen ist, also auch nicht die Zuführung von Gleichspannung vom Hilfsumrichter H über den Gleichrichter G1) kann die für den Gleichspannungswandler W erforderliche Eingangsspannung einen zulässigen unteren Grenzwert unterschreiten. Das bedeutet, daß die Überwachungseinrichtung M keine Gleichspannungsspeisung mehr vom Gleichspannungswandler WE mehr erhält. Jedoch ist - wie zuvor angegeben - in dieser Betriebssituation die weitere Energieversorgung mittels Gleichspannung für die Überwachungseinrichtung trotzdem sichergestellt, und zwar übergangslos, indem sie ihre Gleichspannung dann vom Hilfsumrichter H her erhält.

Es besteht nun das Erfordernis, daß die Funktionsfähigkeit des Gleichspannungswandlers W laufend überwacht wird. Hierzu ist vorgesehen, daß die vom Gleichspannungswandler W angebotene Gleichspannung etwas höher ist als die vom Hilfsumrichter H angebotene Gleichspannung. Dies hat zur Folge, daß bei einem Ausfall der Funktionsfähigkeit des Gleichspannungswandlers W die der Überwachungseinrichtung M zugeführte Speisegleichspannung etwas absinkt, und zwar auf denjenigen Wert, der für den Hilfsumrichter H als Ausgangsspannung maßgebend ist, also um die Differenz zwischen der Ausgangsspannung des Gleichspannungswandlers W und der zuvor genannten Ausgangsspannung.

Über einen Weg m2 empfängt ein Analog-Digital-Umsetzer m der Überwachungseinrichtung das Potential am Verbindungspunkt zwischen den beiden Gleichrichtern G1 und G2. Über diesen Weg empfängt also der Analog-Digital-Umwandler m das Potential von dem Verbindungspunkt. Der Analog-Digital-Umsetzer m enthält eine an sich bekannte Schwellwertmeßeinrichtung, mit deren Hilfe er die Gleichspannungen, die eingangsseitig an der Überwachungseinrichtung anliegen können, an ihrer jeweiligen Höhe unterscheidet. Der betreffende Schwellwert liegt also zwischen den beiden Spannungswerten der vom Gleichspannungswandler gelieferten Spannung einerseits und der vom Hilfsumrichter H gelieferten Gleichspannung andererseits. Die Überwachungseinrichtung M überprüft also das an dem genannten Verbindungspunkt zwischen den Gleichrichtern G1 und G2 liegende Potential. Bei Erhalt der niedrigeren Gleichspannung nimmt die Überwachungseinrichtung eine weitere Messung vor, und zwar eine Messung der Klemmenspannung der Speisebatterie über die Klemmen P und über einen Weg ml. Über diesen Weg wird also die Klemmenspannung der Speisebatterie ebenfalls dem Analog-Digital-Wandler m zugeführt. Dieser möge mit einer weiteren Schwellwertmeßeinrichtung ausgerüstet sein, mit deren Hilfe feststellbar ist, ob die Klemmenspannung der Speisebatterie D oberhalb oder unterhalb eines festgelegten Grenzwertes liegt.

Erhält nun der Analog-Digital-Wandler m der Überwachungseinrichtung M über den Verbindungspunkt zwischen den beiden Gleichrichtern G1 und G2 die niedrigere Gleichspannung, die dann also über den Gleichrichter G1 vom Hilfsumrichter H zugeführt wird, und erkennt die Überwachungseinrichtung mit ihrem Analog-Digital-Wandler m, daß die dem Gleichspannungswandler W zugeführte Versorgungsspannung vorhanden ist und in erforderlicher Weise oberhalb des genannten Grenzwertes liegt, so erkennt die Überwachungseinrichtung hieran, daß der Gleichspannungswandler W von einer Betriebsstörung betroffen ist und gibt demgemäß ein Signal für eine Störung des Gleichspannungswandlers über einen Weg S ab. - Es besteht auch die Möglichkeit, die dem Gleichspannungswandler zugeführte Spannung über den Weg ml anstatt über die Klemmen P vielmehr direkt an Eingangsklemmen des Gleichspannungswandlers W abzugreifen, über die dem Gleichspannungswandler W die Speisespannung zugeführt wird.

Es ist auch noch darauf hinzuweisen, daß der Hilfsumrichter H u.a. die zur Steuerung des Umrichters K erforderlichen Spannungen liefert. Tritt also eine Betriebsstörung beim Hilfsumrichter H ein, so wirkt sich dies auf die Steuerung und auf die Funktion des Umrichters K aus. Dies wiederum wird auf nicht im einzelnen erläuterte Weise von der Überwachungseinrichtung erkannt, registriert und signalisiert.

## Patentansprüche

1. Schaltungsanordnung für Ladegleichrichter für Gleichspannungsenergiespeicher (D), insbesondere Speicherbatterien, in Fernmeldeanlagen, insbesondere Fernsprechvermittlungsanlagen, in denen einer einer Funktionskontrolle eines vom Wechselspannungsversorgungsnetz gespeisten Umrichters (K) dienenden Überwachungseinrichtung (M) Gleichspannungsspeisung angeboten wird sowohl von einem ebenfalls vom Wechselspannungsversorgungsnetz (N) gespeisten Hilfsumrichter (H) als auch von einem von einem Gleichspannungsenergiespeicher (D) gespeisten Gleichspannungswandler (W) über einen dem Hilfsumrichter (H) und einem dem Gleichspannungswandler (W) zugeordneten, einer Entkopplung dienenden Richtleiter (G2),
**dadurch gekennzeichnet**,
daß die vom Gleichspannungswandler (W) angebotene Gleichspannung (U2) höher eingestellt ist als die vom Hilfsumrichter (H) angebotene Gleichspannung (U1), daß die Überwachungseinrichtung (M) diese beiden Gleichspannungen nach ihrer Höhe unterscheidet und bei Erhalt der niedrigeren Gleichspannung (U1) ein Vorhandensein der dem Gleichspannungswandler (W) vom Gleichspannungsenergiespeicher (D) zugeführten Gleichspannung, insbesondere innerhalb vorgegebener Grenzwerte, überprüft und daß die Überwachungseinrichtung (M) bei Erhalt der niedrigeren Gleichspannung (U1) und bei Vorhandensein der dem Gleichspannungswandler (W) vom Gleichspannungsenergie speicher (D) zugeführten Gleichspannung ein Signal für eine Störung des Gleichspannungswandlers (W) abgibt.

2. Schaltungsanordnung nach Anspruch 1,
**dadurch gekennzeichnet**,
daß zur Steuerung des Umrichters (K) dienende Spannungen vom Hilfsumrichter (H) geliefert werden, und daß durch Überwachung des Umrichters (K) durch die Überwachungseinrichtung (M) die Funktionsfähigkeit des Hilfsumrichters (H) mit überwacht ist.

## Claims

1. Circuit arrangement for charging rectifiers for d.c. voltage energy storage devices (D), preferably storage batteries, in telecommunication systems, preferably telephone exchanges, in which a monitoring device (M), serving for functional testing of a converter (K) fed from the a.c. voltage supply network, is offered d.c. voltage feeding both from an auxiliary converter (H), likewise fed from the a.c. voltage supply network (N), and from a d.c.-d.c. voltage converter (W), fed from a d.c. voltage energy storage device (D), via a crystal diode (G2), assigned to the auxiliary converter (H) and to the d.c.-d.c. voltage converter (W) and serving for decoupling, characterized in that the d.c. voltage (U2) offered by the d.c.-d.c. voltage converter (W) is set higher than the d.c. voltage (U1) offered by the auxiliary converter (H), in that the monitoring device (M) distinguishes between these two d.c. voltages according to their level and, upon receiving the lower d.c. voltage (U1), checks, in particular within predetermined limit values, for the presence of the d.c. voltage fed to the d.c.-d.c. voltage converter (W) from the d.c. voltage energy storage device (D) and in that, upon receiving the lower d.c. voltage (U1), given the presence of the d.c. voltage fed to the d.c.-d.c. voltage converter (W) from the d.c. voltage energy storage device (D), the monitoring device (M) emits a signal for a malfunction of the d.c.-d.c. voltage converter (W).

2. Circuit arrangement according to Claim 1, characterized in that voltages serving for controlling the converter (K) are supplied by the auxiliary converter (H), and in that by monitoring of the converter (K) by the monitoring device (M) the functional capability of the auxiliary converter (H) is also monitored.

## Revendications

1. Montage pour redresseur de charge pour des accumulateurs (D) d'énergie à tension continue, notamment des batteries d'accumulateurs, dans des installations de télécommunication, notamment des installations de commutation téléphonique, dans lesquelles à un dispositif (M) de contrôle utilisé pour contrôler le fonctionnement d'un convertisseur (K) alimenté par le réseau d'alimentation à tension alternative, une alimentation en tension continue est fournie aussi bien par un convertisseur auxiliaire (H) alimenté également par le réseau (N) d'alimentation à tension alternative, que par un convertisseur (W) de tension continue, alimenté par un accumulateur (D) d'énergie à tension continue, par l'intermédiaire d'un redresseur (G2) associé au convertisseur (W) de tension continue et d'un redresseur (G1) associé au convertisseur (H) auxiliaire qui servent à réaliser un découplage,
caractérisé par le fait
que la tension continue (U2) fournie par le convertisseur (W) de tension continue est réglée à une valeur supérieure à la tension continue (U1) fournie par le convertisseur auxiliaire (H), que le dispositif (M) de contrôle distingue ces deux tensions continues en fonction de leur amplitude et que, lors de la réception de la tension continue (U1) la plus petite, une présence de la tension continue envoyée au convertisseur (W) de tension continue par l'accumulateur (D) d'énergie en tension continue est contrôlée, notamment entre des valeurs limites prédéterminées, et que, lors de la réception de la tension continue (U1) la plus petite et en cas de présence de la tension continue envoyée au convertisseur (W) de tension continue par l'accumulateur (D) d'énergie à tension continue, le dispositif de contrôle (M) fournit un signal indiquant une perturbation du convertisseur (W) de tension continue.

2. Montage suivant la revendication 1, caractérisé par le fait que les tensions utilisées pour la commande du convertisseur (K) sont fournies par le convertisseur auxiliaire (H), et que la capacité de fonctionnement du convertisseur auxiliaire (H) est contrôlée simultanément au moyen du contrôle du convertisseur (K) par le dispositif (M) de contrôle.
